# EUROPEAN PATENT APPLICATION

(11) **EP 1 544 986 A2**
(43) Date of publication of application: **22.06.2005**
(21) Application number: 04257533.2
(22) Date of filing: 03.12.2004
(51) Int. Cl.: H02K 23/66

(54) **Electric motor with rotational sensor**

(30) Priority: 16.12.2003 US 737515
(71) Applicant: Dura Global Technologies, Inc., Rochester Hills, MI 48309-3575 (US)
(72) Inventor: Greene, Darrell F., Bracebridge, Ontario, P1L 1V1 (CA)
(74) Representative: Trueman, Lucy Petra

(57) **Abstract**

An electric motor including a rotational sensor is provided. Certain examples of the rotational sensor are operative to output a sinusoidal signal that corresponds to the rotational position of the motor armature in response to the potential at a single point or multiple points on the commutator. Certain other examples of the motor and rotational sensor disclosed here are operative to provide multiple pulses per rotation of the armature, which can allow for finer adjustment of devices attached to the motor. The motor and rotational sensor provides a simpler and less costly design requiring fewer parts subject to mechanical failure.

## Description

### Field of the Invention

The present invention is directed to a motor including a rotational sensor. More particularly, certain examples of the invention are directed to a motor including a rotational sensor that is operative to output a signal that can be used to determine the position and/or number of rotations of the armature of the motor.

### Background

Various systems and devices are known for controlling the output of an electric motor. Motor output controls are used, for example, to measure or control the movement or position of an object driven by a motor. In one exemplary application, vehicles are often equipped with power seat adjusting systems. Such seat adjusting systems typically include one or more electric motors to control the fore and aft position of the seat, its height, etc. An occupant typically positions the seat by operating one or more adjustment control members until the seat is positioned suitably. The seat remains in this adjusted position unless adjusted differently, *e.g.*, by a different occupant. A former occupant typically will want the seat position returned to the position he or she had previously selected. Thus, a former occupant is required to re-position the seat back to their previously selected positions.

To facilitate rapid positioning of a seat, advanced seat adjusting systems may include a memory seat module. An occupant can activate the memory function of the seat adjusting system to return the seat to a pre-set position, *i.e.*, to return the vehicle seat to a position pre-set by that occupant, rather than having to manually position the seat or even manually operate the power controls to restore the seat to the desired pre-set seat position. The wiring, relays and sensors required to restore a desired seat position, however, can be complex and are subject to mechanical failure. There is a need for a simpler, more reliable and/or more accurate system for adjusting devices such as vehicle seats, and, in the competitive automotive business, there is also a need for components having a reduction in wires and/or components, such as those used in memory seats, that can lead to cost savings.

It is an object of the present invention to provide a motor including a rotational sensor. It is a particular object of certain examples of the motor disclosed here to provide an inexpensive and reliable motor including a rotational sensor that is operative to sense armature rotation. It is a particular object of certain examples of the motor disclosed here to provide an inexpensive and reliable motor including a rotational sensor that can be used in seat adjustment systems for fast and reliable seat positioning. These and other objects and features of the invention are disclosed and described in detail below.

### Summary

In accordance with a first aspect, an electric motor comprising a rotational sensor is provided. The electric motor comprises at least first and second magnetic poles, an armature comprising a commutator rotatable relative to the first and second magnetic poles, multiple brushes including at least a first brush and a second brush each operative to provide an electrical connection between the armature and a power source, and a rotational sensor. The rotational sensor is in fixed position relative to the multiple brushes and in at least intermittent electrical communication with commutator, wherein the rotational sensor is operative to output a sinusoidal signal. In certain examples, the rotational sensor is in fixed position relative to the multiple brushes and in at least intermittent contact, *e.g.*, sliding contact, with a rotational member, which itself is in intermittent or continuous electrical communication with the commutator. The output signal of the rotational sensor can be used, for example, to determine armature parameters, such as, for example, the position of the armature and/or the number of rotations of the armature.

In accordance with a second aspect, an electric motor comprising a rotational sensor is provided. The electric motor comprises at least first and second magnetic poles, an armature comprising a commutator and rotational member, each of which is rotatable relative to the first and second magnetic poles, multiple brushes including at least a first brush and a second brush each operative to provide an electrical connection between the armature and a power source, and a rotational sensor. The rotational sensor is in fixed position relative to the multiple brushes and at least in intermittent contact with the rotational member, wherein the rotational sensor is operative to output a signal. In certain examples, the rotational sensor is in continuous contact with the rotational member. The output signal of the rotational sensor can be used, for example, to determine armature parameters, such as, for example, the position of the armature and/or the number of rotations of the armature.

In accordance with another aspect, an electric motor comprising means, connected to the motor, for sensing one of the speed of a motor shaft and/or a position of the motor armature relative to the motor housing in order to control the rotational movement of the shaft is provided. In at least some examples, the sensing means is in intermittent electrical communication with a commutator of the motor and provides a sinusoidal output signal for use in determining, for example, the number of rotations of the motor armature. The means for sensing the speed of the shaft and/or the position of the motor armature may be the rotational member and rotational sensor or the other devices disclosed below or combinations of these devices. In addition to the sensing means, the electric motor also includes other components commonly found in electric motors, *e.g.*, brushes, commutator, motor windings, etc.

In accordance with another aspect, a power seat assembly is provided. The power seat assembly comprises a seat base, a seat moveably mounted on the seat base, and at least one motor operative to move the seat relative to the base. The at least one motor comprises at least first and second magnetic poles, an armature comprising a commutator rotatable relative to the first and second magnetic poles, multiple brushes including at least a first brush and a second brush each operative to provide an electrical connection between the armature and a power source, and a rotational sensor. The rotational sensor is in fixed position relative to the multiple brushes and in at least intermittent electrical communication with the commutator, wherein the rotational sensor is operative to output a sinusoidal signal. In certain examples, the motor further includes a rotational member that is configured to be in at least intermittent contact with the rotational sensor and intermittent or continuous electrical communication with the commutator. The output signal of the rotational sensor can be used, for example, to adjust or position the seat base, or other component of the power seat assembly, to a desired or selected position. The output signal can also be used, for example, to return the seat to a pre-selected or pre-programmed position. In certain examples, as described in more detail below, the power seat assembly further comprises one or more additional motors. Such additional motors may include the rotational sensor disclosed here.

In accordance with an additional aspect, a vehicle power seat adjuster is provided. The vehicle power seat adjuster comprises first and second spaced track assemblies, each formed of a first component movable relative to a stationary second component, a motor including at least one rotatable shaft, a rotatable lead screw operatively coupled to the first and second components, and optionally a flexible drive cable coupled between the rotatable shaft and the lead screw. The motor comprises at least first and second magnetic poles, an armature comprising a commutator rotatable relative to the first and second magnetic poles, multiple brushes including at least a first brush and a second brush each operative to provide an electrical connection between the armature and a power source, and a rotational sensor. The rotational sensor is in fixed position relative to the multiple brushes and in at least intermittent electrical communication with the commutator, wherein the rotational sensor is operative to output a sinusoidal signal. In certain examples, the motor further includes a rotational member that is configured to be in at least intermittent contact with the rotational sensor and intermittent or continuous electrical communication with the commutator. The vehicle power seat adjuster can be used, for example, to selectively position the shaft and thereby move the first and/or second components of the seat track assembly. The vehicle power seat adjuster can also be used to move one or more components of the seat track to a pre-selected or a pre-programmed position, for example. In certain examples, the vehicle power seat adjuster includes a plurality of motors each operative to move a portion or portions of the seat in which the motor is attached through a shaft or similar device.

The novel rotational sensor and electric motors disclosed here, and devices and systems including the rotational sensor and electric motors disclosed here, represent a significant technological advance and provide advantages over previous motors including, but not limited to, a simpler design containing fewer mechanical parts that are subject to failure, more accurate and rapid determination of the position of the armature, simpler motor assembly, and the like. Certain power seat systems in accordance with the present disclosure have advantages including, but not limited to, simpler design and more accurate seat positioning. Additional advantages, features, and uses will be recognized by the person of ordinary skill in the art given the benefit of this disclosure and the detailed description of certain examples below.

### Brief Description of Drawings

Certain illustrative examples of the novel motor with rotational sensor disclosed here are described below with reference to the accompanying drawings in which:

FIG. 1A is an exploded schematic of an example of an electric motor with the rotational sensor disclosed here, in accordance with certain examples;

FIG. 1B is a schematic of an example showing two rotational sensors, in accordance with certain examples;

FIG. 2 shows an example of a wave output of the motor of FIG. 1A and using a motor input voltage of 1 V DC and no load, in accordance with certain examples;

FIG. 3 shows an example of a wave output using the motor of FIG. 1A and using a motor input voltage of 6 V DC and no load, in accordance with certain examples;

FIG. 4 shows an example of a wave output using the motor of FIG. 1A and using a motor input voltage of 12 V DC and no load, in accordance with certain examples;

FIG. 5 shows an example of a wave output using the motor of FIG. 1A and using a motor input voltage of 2.5 V DC and no load and starting from stall (Channel 1) compared to a standard Hall Effect sensor output pulse (Channel 2), in accordance with certain examples;

FIG. 6 shows an example of a wave output using the motor of FIG. 1A and using a motor input voltage of 2 V DC and no load (Channel 1) compared to a standard Hall Effect sensor output pulse (Channel 2), in accordance with certain examples;

FIG. 7 shows an example of a wave output using the motor of FIG. 1A and using a motor input voltage of 6 V DC and no load (Channel 1) compared to a standard Hall Effect sensor output pulse (Channel 2), in accordance with certain examples;

FIG. 8 shows an example of a wave output using the motor of FIG. 1A and using a motor input voltage of 12 V DC and no load (Channel 1) compared to a standard Hall Effect sensor output pulse (Channel 2), in accordance with certain examples;

FIG. 9A is a schematic of a circuit suitable for conditioning the wave output of the rotational sensor disclosed here, in accordance with certain examples;

FIG. 9B is a second schematic of a signal conditioning circuit suitable for converting a sinusoidal output signal, or sections thereof, into digital pulses, in accordance with certain examples;

FIG. 9C is schematic of a signal conditioning circuit for use with two or more rotational sensor outputs to reduce bouncing contact error, in accordance with certain examples;

FIG. 10A is a schematic of an example of an electric motor in which the armature includes a full ring rotational sensor, in accordance with certain examples;

FIG. 10B shows an example of an output of the device if FIG. 10A showing an output signal (Channel 1) compared to a standard Hall Effect sensor output pulse (Channel 2);

FIG. 11 A is a schematic of an example of an electric motor in which the armature comprises a split ring rotational sensor, in accordance with certain examples;

FIG. 11B is a schematic of an example of an electric motor in which the armature comprises a split ring rotational sensor, in accordance with certain examples;

FIG. 11C shows an example of an output of the device of FIG. 11A showing an unfiltered wave (Channel 1) compared to a Standard Hall Effect pulse (Channel 2), in accordance with certain examples;

FIG. 12A is a schematic of an example of an electric motor in which the armature comprises is dual-point two-segment rotational sensor, in accordance with certain examples;

FIG. 12B shows an output of the device of FIG. 12A showing a fully conditioned wave (Channel 1) compared to a standard Hall Effect sensor output pulse (Channel 2), in accordance with certain examples;

FIG. 13A is a schematic of an example of an electric motor in which the armature includes a five-point ten-segment rotational sensor, in accordance with certain examples;

FIG. 13B shows an example of an output of the device of FIG. 13A showing an unfiltered wave (Channel 1) compared to a standard Hall Effect pulse (Channel 2), in accordance with certain examples;

FIG. 14 is a schematic of an example of a motor assembly including the rotational sensor disclosed here, in accordance with certain examples;

FIG. 15 is schematic of an example of a seat suitable for use with the devices disclosed here, in accordance with certain examples;

FIG. 16 is a schematic of a first example of a power seat (with the seat and seat back removed) including a plurality of electric motors, in accordance with certain examples; and

FIG. 17 is a schematic of a second example of a power seat (with the seat and seat back removed) including a plurality of electric motors, in accordance with certain examples.

It will be recognized by the person of ordinary skill in the art that the drawings are only exemplary and representative of the novel rotational sensor and devices disclosed here.

### Detailed Description of Certain Examples

The rotational sensor disclosed here may be used in any of innumerable applications where it is desirable to detect or control the rotation of the armature of an electric motor, *e.g.*, to control the adjustment or readjustment of the position of a device attached to or otherwise driven by an output member of the motor. The exact configuration of electric motors comprising the rotational sensor disclosed here will vary depending on the intended use of the motor and depending on the other components included in the motor. Given the benefit of the disclosure above and the following description of various examples, it will be within the ability of the person of ordinary skill in the art to select and design suitable motors comprising the rotational sensor disclosed here.

Although the examples described below include a commutator and a rotational member, it will be within the ability of the person of ordinary skill in the art to employ the principles disclosed here in designing alternative examples employing only a single commutator. Similarly, the exact shape and size of the commutator and rotational member will vary depending on the size and dimensions of the other motor components, *e.g.*, the motor windings, magnets, brushes, etc. and on the intended use of the electric motor.

The novel rotational sensors disclosed here provide advantages over conventional sensors. For example, certain examples of electric motors incorporating a rotational sensor as disclosed here can provide a simper design resulting in the reduction of external wires and connectors and a neater assembly, and can reduce the number of components subject to physical failure, *e.g.*, broken wires and/or connectors. In some examples, electric motors incorporating a rotational sensor as disclosed here are capable of excellent resolution in sensing the speed and/or position of the armature of the motor. Systems incorporating such electric motors, in turn enable faster and more accurate response when used in feedback based control systems. For example, vehicle seat adjusting systems (such as Inteladjust™ and similar systems, such as those commercially available from Dura Automotive Systems, Inc.) can employ such electric motors to achieve more accurate seat positioning. Likewise, any other mechanical system that uses controlled rotation of the armature of an electric motor for controlled positioning or movement of a device or component of the system can advantageously employ the electric motors with rotational sensor in accordance with the present disclosure. In general, the motors disclosed here can advantageously be employed to convert a number of rotations of an output shaft to a predictable physical displacement of a device driven by the motor, *e.g.*, a lead screw. In yet other examples, the rotational sensor disclosed here may be used to indicate rotations per minute, rotational counts and/or position sensing on any motor and/or mechanism of similar construction and relying on similar operating principles. In certain examples, the rotational sensor is a voltage-responsive sensor in that it generates an output signal, *e.g.*, a sinusoidal signal, in response to a voltage, especially a voltage (*e.g.*, a voltage differential relative to ground) in a commutator, *e.g.*, a sinusoidal voltage, of an electric motor during normal operation in which the armature is rotated by energizing brushes in contact with the commutator. In certain examples, the rotational sensor is a passive sensor in that it is not necessary for the rotational sensor to be in electrical communication with its own power source for the rotational sensor to be operative, *e.g.*, the sensor does not require its own power source to sense rotation of the armature and/or generate an output signal. Instead, the rotational sensor can generate a signal, *e.g.*, to a microprocessor or other signal processor, as a tap or minor parasitic draw on the power fed to the commutator through the brushes during normal operation of the motor, for example, the power supplied by a DC or AC power source to the motor. Such parasitic draw has substantially no adverse effect on motor performance, *e.g.*, the motor and/or components thereof are not shorted out or affected by use of the rotational sensor disclosed here. In some examples, the motor is designed such that the rotational sensor does not contact the power brushes, which could decrease motor performance. In certain examples, even where the rotational sensor generates an output signal as a parasitic draw on the power fed to the commutator through the brushes, such output signal is suitable and sufficient to provide an input to a signal conditioning circuit, such as, for example, the exemplary signal conditioning circuits described below. In other examples, the signal outputted by the rotational sensor is independent of the direction of rotation of the armature, *e.g.*, the signal is substantially the same when the armature is rotating in a clockwise direction and a when the armature is rotating in a counterclockwise direction though some phase shift in the signal may be observed when the armature is rotating in different directions.

In certain examples, the rotational sensor is fixed at a ninety-degree angle to the power brushes of the motor. In other examples, the rotational sensor is parallel to the power brushes. It will be recognized by the person of ordinary skill in the art, given the benefit of this disclosure, that the rotational sensor may be fixed at other angles, *e.g.*, angles between zero degrees and ninety degrees, to the power brushes. In yet other examples, the motor disclosed here may include two or more rotational sensors, such as the first and second rotational sensors discussed in certain examples below. One or both of the rotational sensors may be parallel to the power brushes, fixed at a ninety-degree angle to the power brushes or fixed at some angle between zero degrees and ninety degrees to the power brushes. In examples using two rotational sensors, each of the rotational sensors may be configured to provide a signal to a conditioning circuit for use in reducing any counting errors that may occur, for example, from bouncing error or motor recoil after shutting off of the motor. Such a circuit can use the signal from one of the rotational sensors to alternately set and re-set a digital circuit to provide and output which is representative of rotations of the armature. Without wishing to be bound by any particular scientific theory, examples using two rotational sensors along with suitable conditioning circuits are less prone to mechanical switching contact bounce by introducing significant hysteresis.

In various examples, the rotational sensor is in intermittent or discontinuous electrical communication with the commutator during operation of the motor, or is in continuous electrical communication with the commutator. In certain examples discussed below, the rotational sensor is in sliding contact with a rotational member, which is in electrical communication with the commutator. The rotational sensor may contact any suitable surface of the rotational member, *e.g.*, a radially outer circumferential surface. Optionally, especially where contact is intermittent, the rotational sensor may contact a node or point of the rotational member, for example, a radially or axially extending ridge or nub on a surface of the rotational member. For convenience in the discussion below and in the appended claims, such nodes, points, ridges, nubs etc may be referred to generally as points or contact points. In examples having full time contact between the rotational sensor and the rotational member, the rotational sensor may sense rotation of the armature by sensing, *e.g.*, the sinusoidal component of the voltage at the contact point. Suitable circuitry will be readily apparent to the person of ordinary skill in the art in view of this disclosure, for correlating the frequency of the sine wave indicated by the signal from the rotational sensor during motor operation to the number of armature rotations and/or the rotational position of the armature. In those examples of the motors disclosed here in which the rotational sensor has intermittent electrical communication with the commutator, specifically, electrical communication in rotational sequence with each part, or a least one part, of a multi-segment rotational sensor or electrical communication in rotational sequence with each of one or more contact points of the rotational sensor, the rotational sensor may sense rotation of the armature by sensing one or more contact points of the commutator, etc. Here, again, suitable circuitry will be well within the ability of the person of ordinary skill in the art in view of this disclosure, for correlating the number of contacts and/or power pulses to the number of armature rotations and/or the rotational position of the armature. In certain examples, the contact of the rotational member with the commutator may be at least in part electrostatic. In examples where contact is intermittent, for example, contact between the rotational member and the commutator may be established electrostaticly at least at the beginning and/or end of sensor contact.

In certain examples, the rotational member disclosed here is configured to be in electrical communication with the commutator. Such electrical communication can be accomplished using numerous methods and devices that will be recognized by the person of ordinary skill in the art, given the benefit of this disclosure, including but not limited to press-fitting of the rotational member to the commutator, use of an electrical lead between the rotational sensor and one or more portions of the commutator, etc. In certain examples, one or more surfaces of the rotational member is coated with an conductive coating, e.g., a conductive primer, paint or adhesive, and the coated surface is press-fitted to the commutator. In certain examples, the rotational sensor generally includes a cylindrical body with a void in the middle for receiving an axle or shaft of the armature. In certain examples, the cylindrical body may be split into multiple segments electrically isolated from each other using an insulating material or void, whereas in other examples the cylindrical body may be a continuous body. These and other shapes and configurations will be selected and/or designed by the person of ordinary skill in the art, given the benefit of this disclosure. In certain examples, the rotational sensor is designed by suitably configuring or modifying a commercially available commutator, such as those discussed herein, for example.

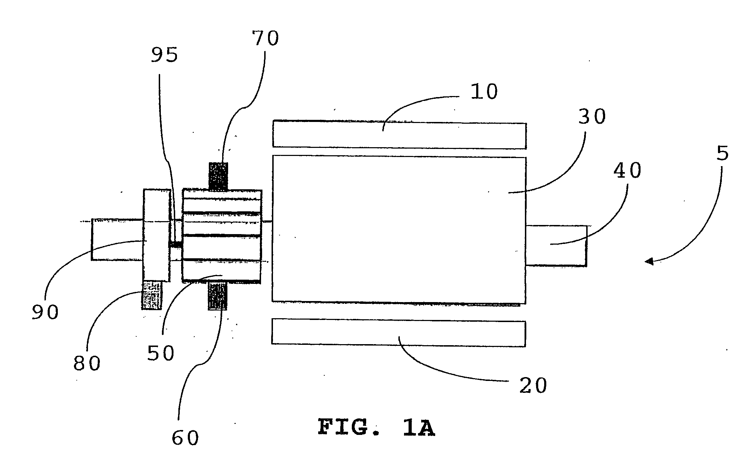

Certain embodiments or examples of the motors disclosed here incorporating a rotational sensor have a configuration as shown in FIG. 1A. Such motors can be produced, for example, using a power seat motor (commercially available from Johnson Electric) that is modified as described below. Motor 5 comprises a first magnetic pole 10 and a second magnetic pole 20 typically having a direction or sign opposite to that of the first magnetic pole 10. The motor also includes an armature having motor core windings 30 around shaft 40 and full ring commutator 50. As used here "armature" refers generally to the portion of the motor that rotates including, for example, the shaft, the core with windings and the commutator. The core windings are typically positioned between the two magnetic poles. A first brush 60 and a second brush 70 are operative to provide an electrical connection between the motor windings and an AC or DC power source (not shown). Rotational member 90 is in electrical communication with commutator 50 through lead 95, e.g., rotational member 90 is electrically connected by lead 95 to the power fed through the brushes to the commutator in a manner that can be sensed by the rotational sensor contacting the rotational member. Rotational sensor 80 contacts rotational member 90 and is operative to output a signal during motor operation that corresponds to rotation of the armature, e.g., to the potential at the commutator. Typically, as discussed further below, as the commutator rotates and is contacted by the brushes, the potential, e.g., a sinusoidal voltage, of the commutator is communicated to the rotational sensor through the rotational member in contact with the commutator and the rotational sensor. In certain examples, the output signal from the rotational sensor varies in a sinusoidal manner. Rotational member 90 may have any of innumerable different shapes and configurations and may be spaced from commutator 50 or may not be. In certain embodiments or examples the rotational sensor contacts a rotational member that is in electrical communication with a commutator that is in the form of a sector, e.g., a partial disk or ring, carried on shaft 40. In alternative examples or embodiments the rotational sensor may directly contact a surface or contact point of rotational member 90. In the example of FIG. 1A, rotational sensor 80 is in a fixed position and parallel to first brush 60 and second brush 70. As noted above, rotational member 90 is electrically connected via lead or electrical connector 95 to commutator 50. In certain examples, the entire rotational member, or one or more portions thereof, is in direct electrical connection with the commutator, such that the signal generated by the rotational sensor is substantially the same as it would be from the primary commutator for indicating armature rotation and/or position. Rotational member 90 can be press fit, keyed or otherwise assembled to the armature so as to be electrically connected to commutator 50, e.g., optionally by direct physical contact with commutator 50 or, as noted above, by a lead such as lead 95 shown in the example of FIG. 1A. Rotational member 90, specifically, the circumferential, radially outward surface of rotational member 90, is in sliding contact, e.g., sliding physical contact or frictional contact, with rotational sensor 80. As noted above, other configurations for contact will be apparent to those skilled in the art given the benefit of this disclosure. Rotational member 90 and the full ring commutator 50 typically rotate together and are rotatable relative to the magnetic poles of the motor.

In accordance with certain examples and without wishing to be bound by any particular scientific theory, as the armature of motor 5 rotates, any one contact or point of the commutator will have a potential that varies from return potential to the applied DC potential and then vice-versa as the commutator rotates 360°. In certain examples, a full rotation will cause the potential of the output signal to vary as a sinusoidal wave or pulse when referenced to return. The peaks and valleys of this sine wave are a function of motor RPM and can be used to count number of revolutions of the armature. In some examples only a portion, section or window of the sine wave is used to count the number of revolutions of the armature, e.g., a window or section of the sine wave is used, for example, the first-half of the sine wave. Such section or portions may be conditioned or unconditioned signals, as discussed in more detail below. When a full ring rotational sensor is in contact with a single point on the commutator, then the voltage sensed by the rotational sensor will be a full sinusoidal wave or have the form or shape of a sinusoidal wave. The resulting output signal, also referred to herein as a wave, may be filtered to reduce noise and/or conditioned by analog and/or digital circuits and may be processed by software to convert the signal to digital pulses that are representative of the number of armature rotations. The output signal can also be further processed by a motor controller, for example, to determine armature position by digital or analog analysis of voltage level(s) to where the phase of the sinusoidal signal which can be correlated to the armature position, and/or, use the rotational speed in a closed loop-feedback system to control the motor as desired under various conditions. The armature position may be deduced or determined from analyzing the output signal. That is, using the amplitude and/or phase of the sinusoidal signal, the rotational position of the armature can be determined. Typically, the amount of current taken from the motor to produce the signal outputted by the rotational sensor is insignificant, e.g., less than 100 mA, such that the rotational sensor does not adversely affect motor performance.

In certain examples, the commutator may be split into an integral number of sections or rings, e.g., 2, 3, 4, 5, 10 sections or rings, etc. In certain examples, the rotational member has the same number of segments as commutator rings, whereas in other examples, the rotational member is a single continuous member and the commutator has multiple sections or rings. As discussed in more detail below, when alternate rings of the commutator contact the brushes, various waveforms can be sensed by the rotational sensor. For example and without wishing to be bound by any particular scientific theory, when the rotational sensor is fixed parallel to a power brush, the voltage sensed by the rotational sensor has substantially the same peak amplitude as the input voltage to the armature. In examples where the rotational sensor is fixed at a ninety-degree angle relative to the first and second brush, the voltage sensed by the rotational sensor has a peak amplitude of about one-half of the input voltage to the armature. A pulse or wave is sensed by the rotational sensor when a segment of the rotational member is in electrical communication with a commutator having a potential. In a commutator comprising five segments or sections, each of which is configured to be connected to the rotational member for at least at some point during rotation of the commutator, five pulses would be generated per revolution of the armature. In certain examples, alternate segments may be left open (not connected) and are pulled to ground potential by a conditioning circuit so that no pulse or wave is observed when alternate segments of the commutator contact the rotational sensor. For example, in a six-segment commutator where alternate segments are left open, only 3 pulses are sensed by the rotational sensor per revolution of the armature. Suitable conditioning circuits include but are not limited to analog comparators (with or without hysteresis), R-C filter circuits, active filters, comparator circuits, analog to digital converters, digital logic circuits, microprocessors, PLC's, and the like. The conditioned signals may be processed digitally and used, for example, for position sensing and feedback control used for programmable speed regulation and regulating soft-starts/stops for systems using, for example, Pulse Width Modulation (PWM), e.g., open loop and/or closed loop pulse width modulation, etc. for speed control. In examples where an analog-to-digital processing technique is implemented, ground differential typically is not an issue because the sensed voltage can be referenced to ground at the low current analog return contact point and/or at the digital return contact point. Any possible ground level shifts due to losses in the motor power wires would then be superimposed onto the sensed waveform, effectively applying a small DC bias to the signal, which would have no or a minimal effect on further processing.

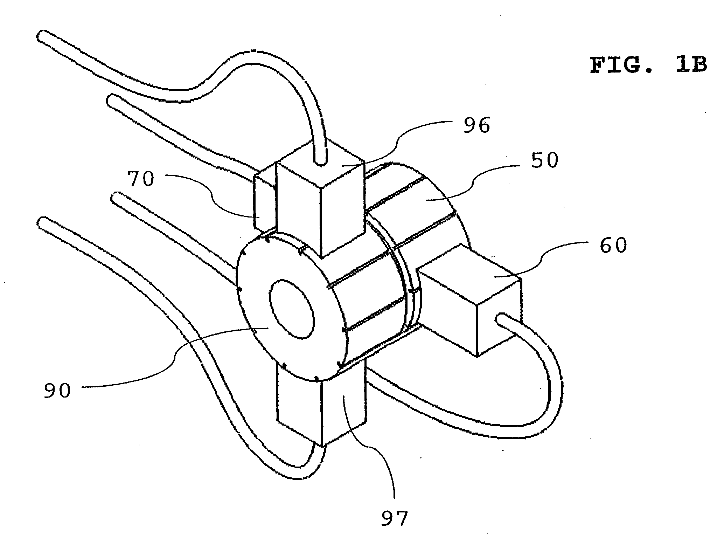

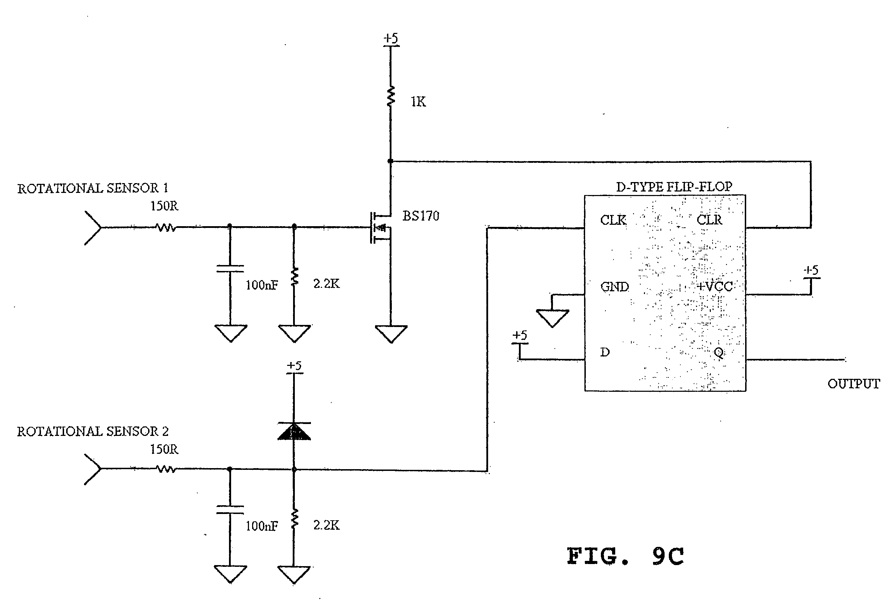

In accordance with another example, two rotational sensors may be used to minimize any errors that may result from bouncing error. Without wishing to be bound by any particular scientific theory, when power to the motor is turned off, there may be some recoil of the armature. That is, the armature may spin in the direction opposite from the desired rotational direction, e.g., about ¼ to ½ a rotation, as the motor armature ceases to rotate. Use of two rotational sensors each in electrical contact with a rotational member can minimize any errors that may result from such bouncing. Referring now to FIG. 1B, rotational sensors 96 and 97 are spaced 180 degrees from each other and ninety degrees from power brushes 60 and 70. Each of rotational sensors 96 and 97 contacts rotational member 90 and is operative to output a signal during motor operation that corresponds to rotation of the armature, e.g., to the potential at the commutator. Rotational sensors 96 and 97 are separated suitably, and may include one or more electrical insulators, such that no or minimal cross-talk or electrical interference occurs between the signals outputted by the rotational sensors. When the example shown in FIG. 1B is used with suitable signal conditioning circuits, such as the circuit shown in FIG. 9C for example, each pulse that is generated represents one full rotation of the armature. By using two rotational sensors, a pulse is only generated when a signal is outputted by each of rotational sensors 96 and 97, which reduces any anomalous pulses that may result from bouncing error or motor recoil.

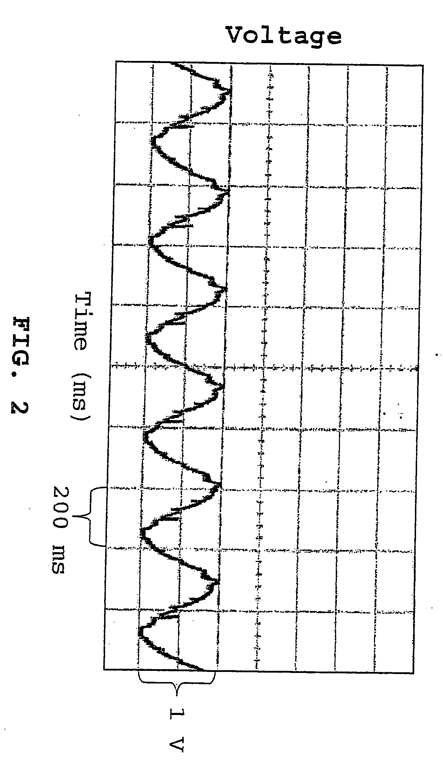

In accordance with one example, an output signal, *e.g.*, the signal outputted by the rotational sensor, of the device of FIG. 1A is shown in FIG. 2. In this example, a motor input voltage, *e.g*., the voltage applied to the power brush, of 1 V DC and no load was used. Each division of the y-axis represents 500 mV and each division of the x-axis represents 200 milliseconds. The output signal varied in a sinusoidal fashion and the minimum to maximum amplitude of the output signal was substantially the same potential as the potential of the power brush, *e.g.*, about 1 V in this example. For a single fixed point on the commutator surface, *e.g.*, a nub or raised projection on the commutator surface, as the single fixed point on the commutator rotates away from the power brush, the potential decreases to a minimum, where the single fixed point is approximately 180 degrees from the power brush. Similarly, as the single fixed point of the commutator rotates toward the power brush the potential increases until it reaches a maximum value (1 V) where the single fixed point of the commutator is proximal to and in contact with the power brush. The potential of the rotational member, which is in electrical communication with the commutator, is about the same as the potential of the commutator, and the rotational sensor senses about the same potential as experienced by the single fixed point of the commutator and can be used as a measure of the number of rotations of the armature, which in this example is about 1 rotation every 360 milliseconds.

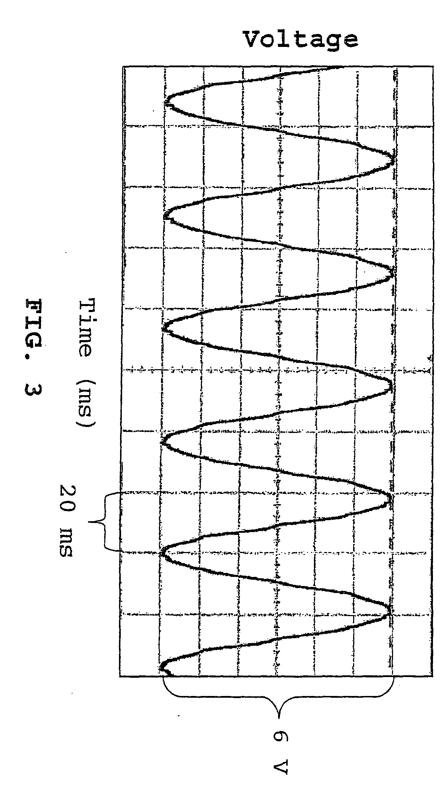

In accordance with another example, an output signal of the rotational sensor of the device of FIG. 1A is shown in FIG. 3. In this example, a motor input voltage of 6 V DC and no load was used. Each division of the y-axis represents 1 V and each division of the x-axis represents 20 milliseconds. The output signal varied in a sinusoidal fashion and the maximum to minimum amplitude of the output signal was substantially the same potential as the potential of the power brush, e.g., about 6 V in this example. For a single fixed point on the commutator surface, as the single fixed point rotates away from the power brush, the potential decreases to a minimum, where the single fixed point is approximately 180 degrees from the power brush. Similarly, as the single fixed point of the commutator rotates toward the power brush the potential increases until it reaches a maximum value where the single fixed point is proximal to and in contact with the power brush. The potential of the rotational member, which is in electrical communication with the commutator, is about the same as the potential of the commutator, and the rotational sensor senses about the same potential as experienced by the single fixed point and can be used as a measure of the number of rotations of the armature, which in this example is about 1 rotation every 40 milliseconds.

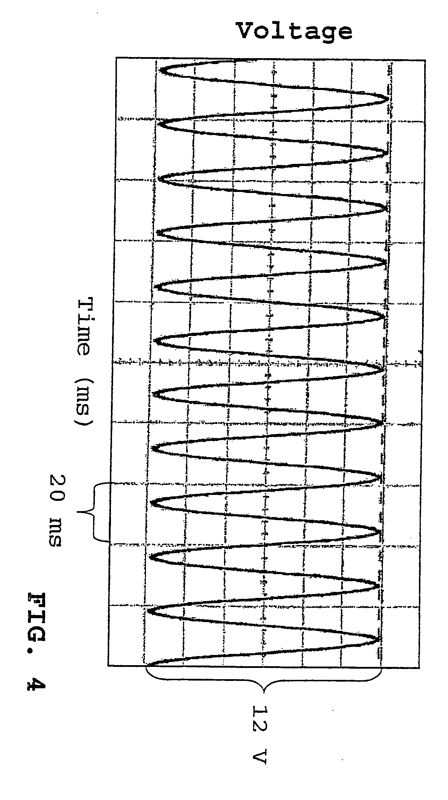

In accordance with yet another example, an output signal of the rotational sensor of the device of FIG. 1A is shown in FIG. 4. In this example, a motor input voltage of 12 V-DC and no load was used. Each division of the y-axis represents 2 V and each division of the x-axis represents 20 milliseconds. The output signal varied in a sinusoidal fashion and the maximum to minimum amplitude of the output signal was substantially the same potential as the potential of the power brush, *e*.*g*., about 12 V in this example. For a single fixed point on the commutator surface, as the single fixed point of the commutator rotates away from the power brush, the potential decreases to a minimum, where the single fixed point is approximately 180 degrees from the power brush. Similarly, as the single fixed point of the commutator rotates toward the power brush, the potential increases until it reaches a maximum value (12 V DC) where the single fixed point is proximal to and in contact with the power brush. The potential of the rotational member, which is electrical communication with the commutator, is about the same as the potential of the commutator, and the rotational sensor senses about the same potential as experienced by the single fixed point and can be used as a measure of the number of rotations of the armature, which in this example is about 1 rotation every 20 milliseconds.

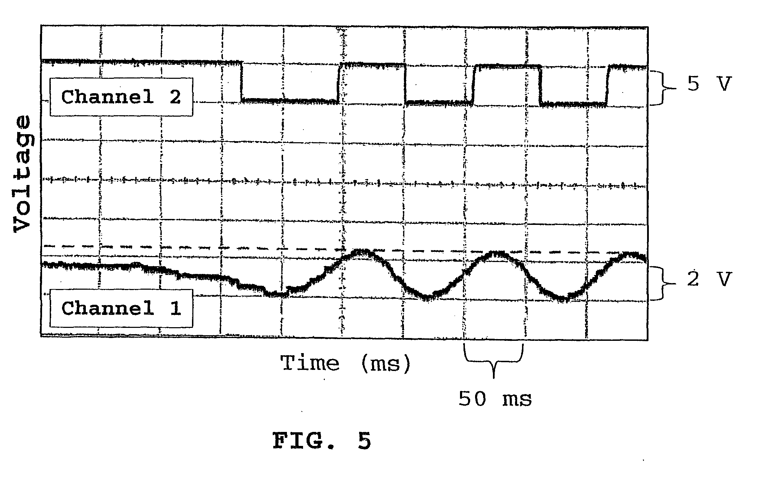

In accordance with an additional example, an output signal of the rotational sensor of the device of FIG. 1A is shown in FIG. 5. In this example, the motor was started from a stall using a motor input voltage of 2.5 V DC and no load. Each division of the y-axis of Channel 1 represents 2 V. Each division of the y-axis of Channel 2 represents 5 V. Each division of the x-axis represents 50 milliseconds. The output signal (Channel 1) varied in a sinusoidal fashion and the maximum to minimum amplitude of the output signal was substantially the same potential as the potential of the power brush, *e.g.*, about 2.5 V in this example. For a single fixed point on the commutator surface, as the single fixed point rotates away from the power brush, the potential decreases to a minimum, where the single fixed point is approximately 180 degrees from the power brush. Similarly, as the single fixed point of the commutator rotates toward the power brush, the potential increases until it reaches a maximum value (2.5 V) where the single fixed point is proximal to and in contact with the power brush. The potential of the rotational member, which is in electrical communication with the commutator, is about the same as the potential of the commutator, and the rotational sensor senses about the same potential as experienced by the single fixed point and can be used as a measure of the number of rotations of the armature, which in this example is about 1 rotation every 100 milliseconds. The output signal was compared to a standard Hall Effect pulse (Channel 2). The output signal (Channel 1 of FIG. 5) of the rotational sensor shows that each armature rotation is represented by a single wave having a generally sinusoidal shape. The Hall Effect sensor generates a single square wave pulse (Channel 2) each time the armature rotates 360°. The Hall Effect sensor can only provide a single pulse for each rotation of the armature. In contrast, examples of the motor and rotational sensor disclosed here can provide multiple pulses per single rotation of the armature, which can provide for increased tuning and adjustment of a shaft, lead screw or member coupled to the motor.

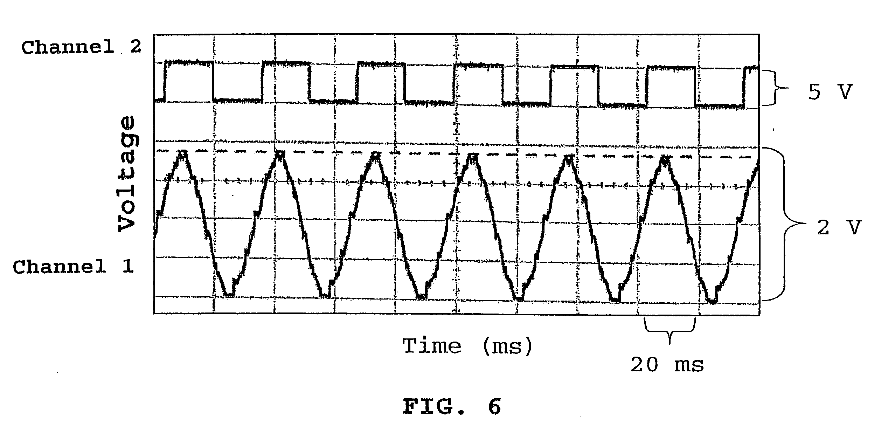

In accordance with an additional example, an output signal of the rotational sensor of the device of FIG. 1A is shown in FIG. 6. In this example, an input motor voltage of 2 V DC and no load was used. Each division of the y-axis of Channel 1 represents 500 mV. Each division of the y-axis of Channel 2 represents 5 V. Each division of the x-axis represents 20 milliseconds. The output signal (Channel 1) varied in a sinusoidal fashion and the maximum to minimum amplitude of the output signal was substantially the same potential as the potential of the power brush, *e.g.*, about 6 V in this example. For a single fixed point on the commutator surface, as the single fixed point of the commutator rotates away from the power brush, the potential decreases to a minimum, where the single fixed point is approximately 180 degrees from the power brush. Similarly, as the single fixed point of the commutator rotates toward the power brush, the potential increases until it reaches a maximum value (6 V) where the single fixed point is proximal to and in contact with the power brush. The potential of the rotational member, which is in electrical communication with the commutator, is about the same as the potential of the commutator, and the rotational sensor senses about the same potential as experienced by the single fixed point and can be used as a measure of the number of rotations of the armature, which in this example is about 1 rotation every 170-180 milliseconds. The output signal was compared to a standard Hall Effect pulse (Channel 2). The output signal (Channel 1 of FIG. 6) of the rotational sensor shows that each armature rotation is represented by a single wave having a generally sinusoidal shape. The Hall Effect sensor generates a single square wave pulse (Channel 2) each time the armature rotates 360°. The Hall Effect sensor can only provide a single pulse for each rotation of the armature. In contrast, examples of the motor and rotational sensor disclosed here can provide multiple pulses per single rotation of the armature, which can provide for increased tuning and adjustment of a shaft, lead screw or member coupled to the motor.

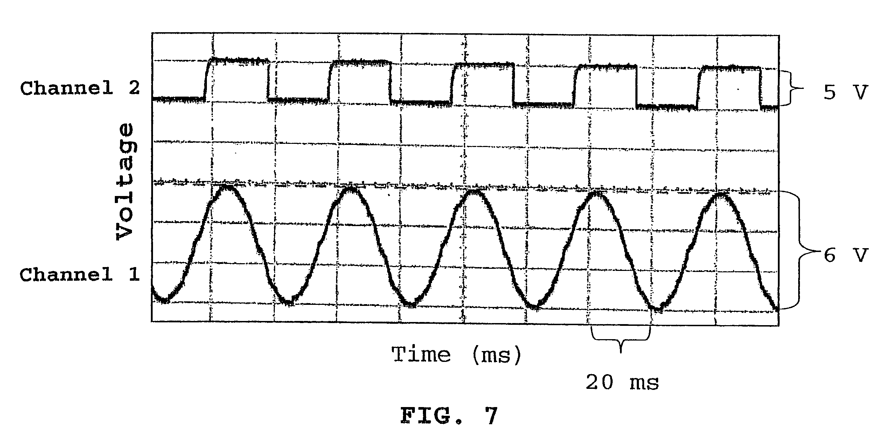

In accordance with another example, an output signal of the rotational sensor of the device of FIG. 1A is shown in FIG. 7. In this example, an input motor voltage of 6 V DC and no load was used. Each division of the y-axis of Channel 1 represents 2 V. Each division of the y-axis of Channel 2 represents 5 V. Each division of the x-axis represents 20 milliseconds. The output signal (Channel 1) varied in a sinusoidal fashion and the maximum to minimum amplitude of the output signal was substantially the same potential as the potential of the power brush, *e.g.*, about 6 V in this example. For a single fixed point on the commutator surface, as the single fixed point rotates away from the power brush, the potential decreases to a minimum, where the single fixed point is approximately 180 degrees from the power brush. Similarly, as the single fixed point of the commutator rotates toward the power brush, the potential increases until it reaches a maximum value (6 V) where the single fixed point is proximal to and in contact with the power brush. The potential of the rotational member, which is in electrical communication with the commutator, is about the same as the potential of the commutator, and the rotational sensor senses about the same potential as experienced by the single fixed point and can be used as a measure of the number of rotations of the armature, which in this example is about 1 rotation every 40 milliseconds. The output signal was compared to a standard Hall Effect pulse (Channel 2). The output signal (Channel 1 of FIG. 7) of the rotational sensor shows that each armature rotation is represented by a single wave having a generally sinusoidal shape. The Hall Effect sensor generates a single square wave pulse (Channel 2) each time the armature rotates 360°. The Hall Effect sensor can only provide a single pulse for each rotation of the armature. In contrast, examples of the motor and rotational sensor disclosed here can provide multiple pulses per single rotation of the armature, which can provide for increased tuning and adjustment of a shaft, lead screw or member coupled to the motor.

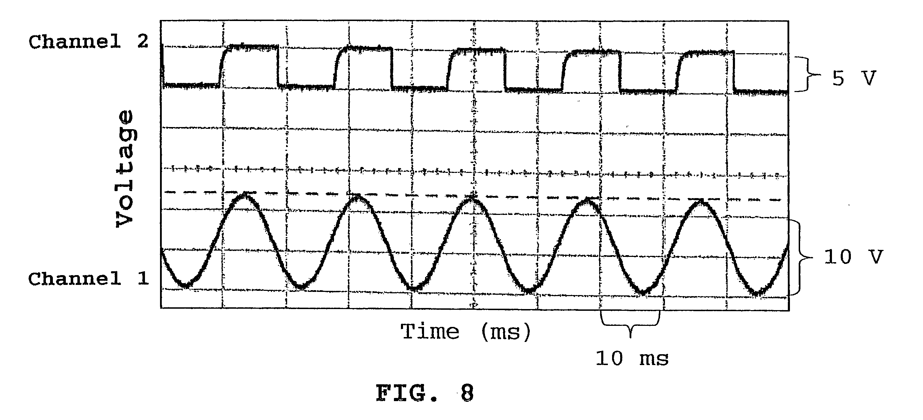

In accordance with another example, an output signal of the rotational sensor of the device of FIG. 1A is shown in FIG. 8. In this example, an input motor voltage of 12 V DC and no load was used. Each division of the y-axis of Channel 1 represents 5 V. Each division of the y-axis of Channel 2 represents 5 V. Each division of the x-axis represents 10 milliseconds. The output signal (Channel 1) varied in a sinusoidal fashion and the amplitude of the output signal was substantially the same potential as the potential of the power brush, e.g., about 12 V in this example. For a single fixed point on the commutator, as the single fixed point of the commutator rotates away from the power brush, the potential decreases to a minimum, where the single fixed point is approximately 180 degrees from the power brush. As the single fixed point of the commutator rotates toward the power brush, the potential increases until it reaches a maximum value (12 V) where the single fixed point is proximal to and in contact with the power brush. The potential of the rotational member, which is in electrical communication with the commutator, is about the same as the potential of the commutator, and the rotational sensor senses about the same potential as experienced by the single fixed point and can be used as a measure of the number of rotations of the armature, which in this example is about 1 rotation every 18-20 milliseconds. The output signal was compared to a standard Hall Effect pulse (Channel 2). The output signal (Channel 1 of FIG. 8) of the rotational sensor shows that each armature rotation is represented by a single wave having a generally sinusoidal shape. The Hall Effect sensor generates a single square wave pulse (Channel 2) each time the armature rotates 360°. The Hall Effect sensor can only provide a single pulse for each rotation of the armature. In contrast, examples of the motor and rotational sensor disclosed here can provide multiple pulses per single rotation of the armature, which can provide for increased tuning and adjustment of a shaft or member coupled to the motor.

Suitable commutators for use in the motors disclosed here will be readily selected and/or designed by the person of ordinary skill in the art, given the benefit of this disclosure, and exemplary commutators are commercially available from Ineca Co. (Moon Township, PA), for example. As discussed in more detail below, other types of commutators can also be used including but not limited to split ring commutators, multi-ring commutators and the like. Other types of commutators can be used and/or adapted for use with the novel rotational sensor disclosed here.

In certain examples, the rotational member is made by modifying a standard motor commutator. In one example, the commutator was cut to the desired width and the segments soldered together as needed to produce a full-ring, and variations of the split ring. The rotational member was then press fit onto the motor shaft and glued in place near the motor commutator, a connection was then made to connect the ring, or segment thereof, to the desired point or points on the commutator.

In certain examples, the rotational sensor may be attached to a motor housing or may be configured to contact a rotational member using numerous devices and methods selected by the person of ordinary skill in the art, given the benefit of this disclosure. In some examples, the rotational sensors disclosed here includes a conductive material such as graphite. In other examples, the rotational sensor includes a conductive metal, such as copper or gold. In yet other examples, the rotational sensor includes mixed conductive materials, *e.g.*, graphite and copper, wherein one or more of the materials is capable of conducting a current, voltage or other electrical signal. It will be recognized by the person of ordinary skill in the art that other suitable materials may be included in and/or on the surface of the rotational sensor including but not limited to tin, silver, and copper-alloys. In yet other examples, the rotational sensor includes a nonconductive body having a deposited conductive material on its surface. Suitable methods for depositing conductive materials will be selected by the person of ordinary skill in the art, given the benefit of this disclosure and exemplary techniques include but are not limited to vapor deposition, directed vapor deposition, chemical vapor deposition, spin-coating and the like. The rotational sensor may generally be any shape, size or dimension as long as one or more surfaces of the rotational member can contact, *e.g.*, continuous or semi-continuous contact, the rotational sensor during operation of the motor.

In accordance with certain examples, the rotational sensor is typically in electrical communication with one or more devices for receiving the outputted signal. As used here the term "electrical communication" is used in the broad sense and includes wired communication, *e.g.*, through electrical wires, leads or through physical contact, and wireless communication, *e.g.*, infrared, radiowaves, standard wireless protocols such as 802.11 (a), (b) and (g) and the like. In certain examples, only three electrical wires are used in the motor disclosed here. A first electrical wire is connected to a power source and a first brush. A second electrical wire is connected to a power source and a second brush, and a third wire is connected to the rotational sensor. In examples using more than one rotational sensor it may be necessary to use an additional wire or wires connected to the additional rotational sensor(s). In certain examples, the third electrical wire is also connected to a device for receiving the output signal of the rotational sensor. Suitable electrical wires and leads will be selected by the person of ordinary skill in the art, given the benefit of this disclosure, and exemplary wires and leads include but are not limited to stranded or solid copper conductors with insulation of PVC, Teflon, or other suitable materials, and those electrical wires commercially available from Alpha Cable, Belden and other manufacturers. Suitable wireless devices include those commercially available from Mirochip, National Semiconductor, Texas Instruments, ST Microelectronics and the like. Examples of such devices would include but are not limited to Bluetooth, Bluemoon, and other RF transceivers. Other devices for wired and wireless communication will be recognized by the person of ordinary skill in the art given the benefit of this disclosure.

In certain examples, the output signal from the rotational sensor is monitored directly, *e.g.*, viewed on an output screen of an oscilloscope or other device. In other examples, the output signal is used to determine or count the number of times the armature has rotated. For example and as discussed above, when a full ring rotational member is used, each sine wave corresponds to a single armature rotation. In certain examples, the motor is coupled to a shaft or member that is operative to move, drive or displace a device *e.g.*, a seat base, attached to the shaft. In certain examples, the shaft of the motor is coupled to an output shaft through a coupler, *e.g.* a flexible coupler, flex cable, ridged cable, solid shaft or link and the like. In other examples, the shaft of the motor is selected such that the output shaft and the motor are a single device. In some examples, it may be desirable to move the seat base a selected distance, for example, 100 mm. An electric motor can be constructed using the rotational sensor disclosed here where one full rotation of the armature corresponds to 0.5 mm displacement of the shaft. To achieve 100 mm of displacement, the motor armature would rotate 200 times (200 rotations x 0.5 mm/rotations = 100 mm).

In accordance with some examples, suitable devices for receiving the output signal from the rotational sensor include but are not limited to processors, microprocessors, motor controllers, *e.g.* motor controllers including processors, speed controllers, position sensors, signal conditioners, etc. In accordance with certain examples, a memory module may be used with the motor and rotational sensor disclosed here. Typically, the memory module is used in a motor that is coupled to a shaft or member that can move, drive or displace an object or device. The memory module can have a record of the current position based on the number of rotations of the armature. For example, the memory module may have a record that the device coupled to the shaft has been moved a distance of 100 mm from a factory zero setting. If it is desirable to adjust the seat to a position of 50 mm from the factory zero setting, then the motor can reverse direction and the armature can rotate about 100 times (assuming that 1 rotation equals 0.5 mm of displacement) to position the device. In certain examples, the memory module is operative to store information. As used here, "stored information" refers to any information that may be stored by a memory unit and/or a memory module. Typically such stored information is used to determine the current position of a device and then to reposition the device based on a signal received by a processor or motor controller, for example. Suitable memory modules comprise a memory unit, a processor, a memory unit and a processor, etc., and exemplary memory modules are commercially available from Lear, Cherry, and Visteon.

In accordance with some examples, gears, linkages and the like may also be coupled to motor including the rotational sensor. Suitable gears and gear linkages include those commercially available from IMS Gear, LM Gear, Micron and the like.

Suitable devices which can be used with the motor and rotational sensor disclosed here include but are not limited to seats, seat tracks, seat bases, windows, doors, adjustable devices where it is beneficial or desirable to rapidly return the device to a pre-selected position or pre-adjusted position and/or provide speed or torque control, other extendable/extractable devices such as automated steps or running boards, linear or rotating actuators and the like. It will be within the ability of the person of ordinary skill in the art, given the benefit of this disclosure, to use the motors and rotational sensors disclosed here with these and other devices.

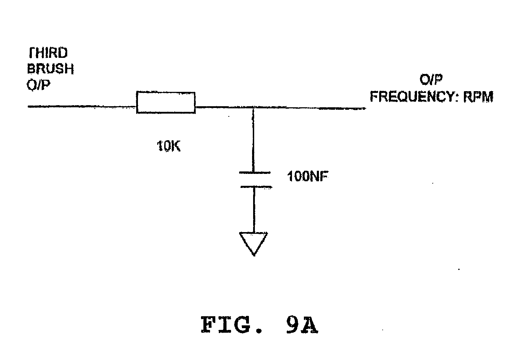

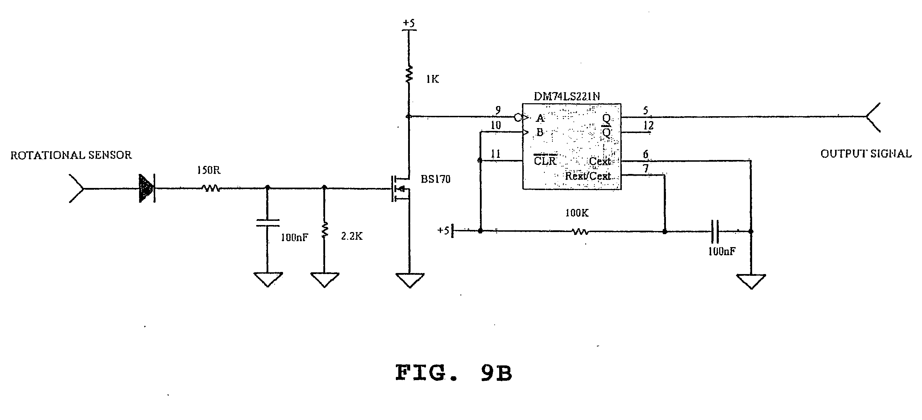

In accordance with some examples, suitable circuitry can be used with the rotational sensor to provide a desired signal. For example, where it is desirable to provide a signal that resembles a square wave, *e.g.*, a signal similar to the signal outputted by the Hall Effect sensor, for example, a circuit such as the circuits shown in FIGS. 9A and 9B may be used. The components of the signal conditioning circuit shown in FIGS. 9A and 9B are well known to the person of ordinary skill in the art, and, the person of ordinary skill in the art, given the benefit of this disclosure, will be able to design such circuits suitable for outputting a selected signal or signal shape. In certain examples, the generally sinusoidal output signal from the rotational sensor is sent to the circuit shown in FIG. 9B and the resulting signal outputted has a similar shape to the signal outputted by a Hall Effect sensor. For example, the sinusoidal signal can be sent to an RC circuit, for example, as a first stage in filtering and the resulting signal will be suitable for further filtering by more linear stages and then by non-linear devices such that it will more resemble a square wave. In other examples, suitable circuitry is used to condition the sinusoidal output signal and the resulting conditioned signal has a generally sinusoidal shape. Such signal conditioning is advantageous for a number of reasons including but not limited to use of the rotational sensor with conventional devices, e.g., those devices that are configured to receive a square wave signal from a Hall Effect sensor. Other circuitry may also be used with the motor and rotational sensor disclosed here including but not limited to analog-to-digital converters (ADC), microprocessors, signal-conditioners, digital signal processors (DSP), comparators, logic timers or gates, active analog devices, etc. It will be within the ability of the person of ordinary skill in the art, given the benefit of this disclosure, to design suitable circuits for outputting a desired signal using the rotational sensor disclosed here.

In accordance with other examples, suitable conditioning circuits can also be used for conditioning signals from two rotational sensors. One example of such a signal conditioning circuit is shown in FIG. 9C. The components of the signal conditioning circuit shown in FIG. 9C are well known to the person of ordinary skill in the art, and, the person of ordinary skill in the art, given the benefit of this disclosure, will be able to design such circuits suitable for outputting a selected signal or signal shape. The output signal from a first rotational sensor and the output signal from a second rotational signal are fed to the circuit shown in FIG. 9C, and, using the output signals, a signal similar to the signal outputted by a Hall Effect sensor is outputted. That is, a signal having a generally square wave shape is outputted by the circuit of FIG. 9C. As discussed above, one advantage of using two rotational sensors is to minimize any anomalous counts from bouncing error or motor recoil.

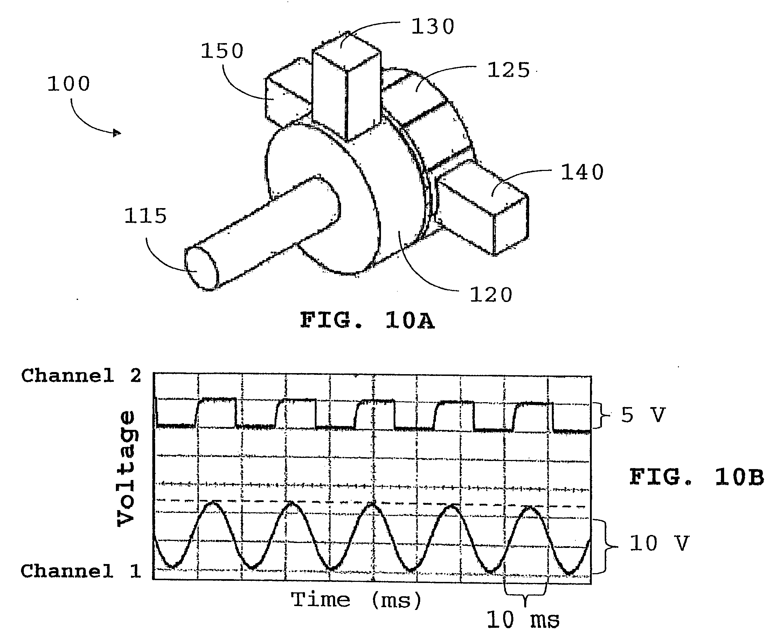

In accordance with certain examples, an exemplary motor 100 comprising a rotational member 120 press fitted to a full ring commutator 125 is shown in FIG. 10A. Rotational member 120 and commutator 125 are in continuous and direct contact. Each of rotational member 120 and commutator 125 is a continuous and generally cylindrical body with a void in the middle for receiving an axle or shaft 115. Rotational member 120 and commutator 125 typically rotate together and are rotatable relative to first and second magnetic poles (not shown) of the motor. Rotational sensor 130 is at a fixed position at a ninety-degree angle to a first brush 140 and second brush 150, which are each operative to provide an electrical connection between the armature and a power source (not shown). That is, as rotational member 120 and commutator 125 rotate during operation of motor 110, commutator 125 contacts first brush 140 and second brush 150, and rotational member 120 is in direct contact and continuous contact with rotational sensor 130. The rotational sensor senses a voltage corresponding to the potential on the rotational member, which is substantially the same as the potential on a point of the commutator. The voltage sensed by the rotational sensor corresponds to the rotational position of the armature. For example, referring now to FIG. 10B, as the rotational member and commutator rotate clockwise, commutator 125 contacts power brush 140, which in this example is a brush with 12 V DC power. The rotational sensor senses the 12 V DC potential of a single segment on the commutator 125 by continuously contacting rotational member 120 (see the maximum signal in Channel 1 of FIG. 10B). As the rotational member and commutator continue to rotate clockwise away from power brush 140, the potential drops as commutator 125 approaches and contacts second brush 150, which in this example is a brush with return power, *e.g.*, 0 V DC (see the minimum signal in Channel 1 of FIG. 10B). When the output signal of rotational sensor 130 is monitored as the rotational member and commutator rotate, the output signal varies in a generally sinusoidal fashion, *e*.*g*., is a sine wave. The shape of the output signal of the sensor disclosed here differs when compared to the shape of the output signal from a Hall Effect sensor, which resembles a square wave (see Channel 2 of FIG. 10B). A single electrical wire may be used to carry the output signal from the rotational sensor to a device, such as a processor. Alternatively, multiple electrical wires can be used to carry the output signal from one or more rotational sensors to a selected device, such as a motor controller or a processor. Suitable signal conditioning can be performed so that the output signal from the rotational sensor resembles a square wave and/or to filter the noise from the output signal. Exemplary devices for conditioning signals are discussed herein and other suitable devices will be recognized by the person of ordinary skill in the art given the benefit of this disclosure.

In accordance with certain other examples, the number of cycles or frequency of the sine wave, also referred to herein as the number of pulses, can be used to determine the number of times that the armature has rotated. In the example shown in FIGS. 10A and 10B, one period of the sine wave is roughly equivalent to one rotation of the armature. In examples where motor 100 drives a shaft, such as shaft 115, the number of rotations of the armature can be used to adjust selectively the distance traveled by a lead screw driven by the motor shaft. For example, in examples where one full rotation of the armature corresponds to 0.1 mm of shaft travel, the number of rotations of the armature can be selected such that the lead screw is displaced by a selected amount. In this example, after 10 full rotations of the armature, the lead screw will be displaced about 1 mm. Such displacement can occur in either direction. That is, depending on the rotational direction of the armature, the lead screw can be extended or retracted. For example, where a clockwise rotation of the armature corresponds to extension of the lead screw, counterclockwise rotation of the armature corresponds to retraction of the lead screw. By counting the number of pulses, a selected displacement of a lead screw can be accomplished. It will be within the ability of the person of ordinary skill in the art to select and design suitable couplers, gears, linkages and the like, for coupling motors that include the rotational sensor disclosed here with suitable members, such as a lead screw, and exemplary gears, linkages and the like are discussed herein.

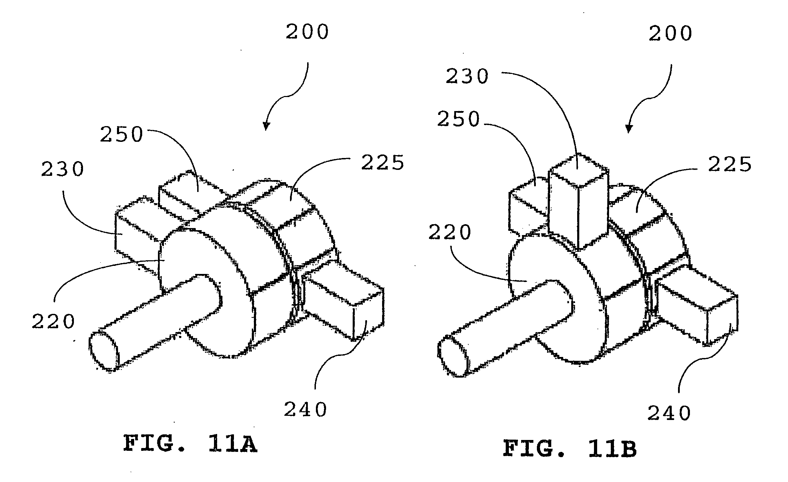

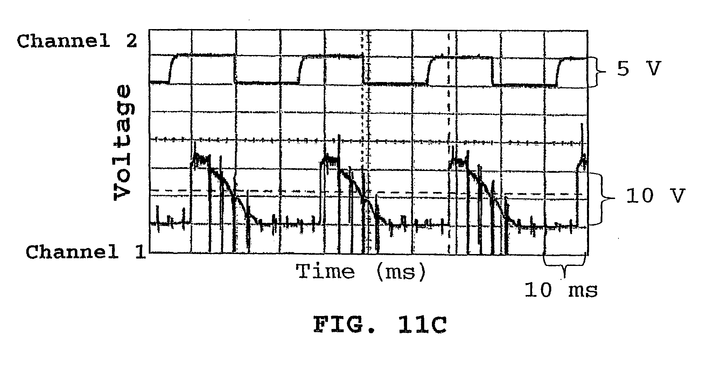

In accordance with other examples, a motor 200 comprising a first split ring rotational member 220 and a commutator 225 press fitted to the split ring rotational member is shown in FIGS. 11A and 11B. The split-ring rotational member typically includes two bodies or rings separated by an insulating material so that the rings are not necessarily in physical contact or in electrical communication with each other. Suitable split-ring rotational members will be selected and/or designed by the person of ordinary skill in the art, given the benefit of this disclosure. Referring to FIG. 11A, rotational sensor 230 is at a fixed position and parallel to first brush 240 and second brush 250, which are each operative to provide an electrical connection between the armature and a power source (not shown). In the example shown in FIG. 11A, the rotational sensor 230 is positioned proximal and parallel to second brush 250. Typically the rotational sensor 230 contacts, continuously or intermittently, split-ring rotational member 220. As the first segment or ring of rotational member 220 contacts rotational sensor 230, the rotational sensor is operative to generate an output signal corresponding to the rotational position of the armature. That is, as the commutator and split ring rotational member rotate during operation of motor 200, a first segment of split-ring rotational member 220 is in contact with rotational sensor 230 and is also in electrical communication with a first segment of commutator 225. The rotational sensor senses a voltage corresponding to the potential of the first segment of the commutator. The voltage sensed by the rotational sensor indicates the position of the armature. For example, referring now to FIGS. 11A and 11C, as split-ring rotational member 220 and commutator 225 rotate clockwise, the first segment of commutator 225 contacts power brush 250, which in this example is a brush with 12 V DC power. The rotational sensor senses the 12 V potential of the first segment of commutator 225 by contacting a segment of split-ring rotational member 220 (see the maximum signal in Channel 1 of FIG. 11 C). As the commutator and rotational member continue to rotate clockwise away from brush power 250, the potential drops as the first segment of the commutator approaches and contacts second brush 240, which in this example is a brush with return power (0 V DC). At this position, the rotational sensor does not sense any voltage because the second segment of the rotational member is not in electrical communication with the commutator. That is, the commutator and rotational member are configured such that only one of the two segments of the rotational member that contacts the rotational sensor for each full rotation of the armature, has a potential during operation of the motor. This result may be accomplished, for example, by placing only one of the segments of the rotational member in electrical communication with a segment of the commutator. The other segment of rotational member 220 is not in electrical communication with commutator 225 and will not pass any electrical signal to rotational sensor 230. In this example, one full rotation of the motor will provide a single pulse. When the output signal of rotational sensor 230 is monitored as the commutator and rotational member rotate, the output signal varies in a half sine wave fashion (see FIG. 11C). Without wishing to be bound by any particular scientific theory, if the rotational sensor was positioned at a ninety-degree angle from first brush 240 and second brush 250 (see FIG. 11B), then the shape of the output signal would be similar to the shape shown in FIG. 11C except the phase of the output signal would be shifted by ninety-degrees. Similar to the other examples, the shape of the output signal of the sensor disclosed in this example differs when compared to the shape of the output signal from a Hall Effect sensor, which resembles a square wave (see Channel 2 of FIG. 11 C). However, suitable signal conditioning can be performed so that the output signal resembles a square wave and/or to filter the noise from the output signal, and exemplary circuits for conditioning the output signal are discussed herein.

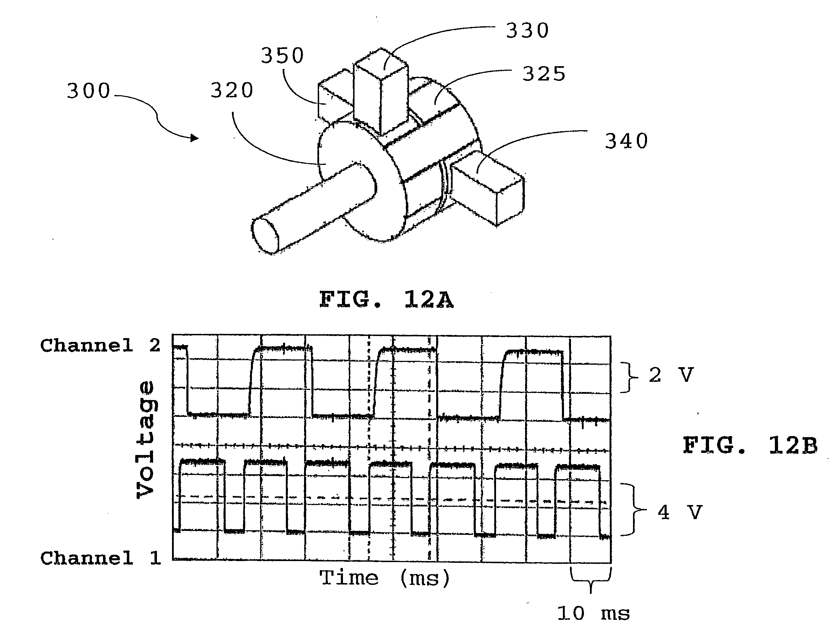

In accordance with yet other examples, a motor 300 comprising a two-point or two-contact split-ring rotational member and a commutator is shown in FIG. 12A. For clarity the armature is not shown. In a two-point or two-contact embodiment, each of the segments of the rotational member is in electrical communication with a segment of the commutator. Rotational sensor 330 is at a fixed position at a ninety-degree angle to first brush 340 and second brush 350, which are each operative to provide an electrical connection between the armature and a power source (not shown). Typically, as the commutator and rotational member rotate, at least some portion of the rotational member 320 contacts rotational sensor 330. As the first segment of rotational member 320 contacts rotational sensor 330, the rotational sensor is operative to generate an output signal corresponding to the rotational position of the armature. That is, as the commutator and rotational sensor rotate during operation of motor 300, a first segment of rotational member 320 is in contact with rotational sensor 330 and in electrical communication with a first segment of the commutator 325. The rotational sensor senses a voltage corresponding to the potential of that segment of the commutator. The voltage sensed by the rotational sensor indicates the position of the armature. In this example, a split ring rotational member 320 and a commutator 325, in physical contact with the rotational member 320, was used. Each segment of the rotational member was configured to contact the rotational sensor for at least some portion during operation of the motor. Each alternate segment of the rotational sensor was also configured to be in electrical communication with one of the alternate segments of commutator 325. Referring now to FIG. 12B, as the commutator and rotational member rotate clockwise, the first segment of commutator 325 contacts power brush 340, which in this example is a power brush with 12 V DC power. The rotational sensor senses a portion of the 12 V potential of the first segment of commutator 325 by contacting a segment on the rotational member in electrical communication with the alternate segment of commutator 325 (see the maximum signal in Channel 1 of FIG. 12B). As the commutator continues to rotate clockwise away from power brush 340, the other segment of commutator 325 contacts power brush 340 and another signal is sensed by the rotational sensor as it contacts another alternate segment of rotational member 320. In this example, a circuit such as that shown in FIG. 9B, was used to condition the waves or pulses so that the wave shape resembles that of a Hall Effect sensor, but at twice the frequency as the signal that would result from a Hall Effect sensor. Such wave conditioning allows the motor and sensor of the present invention to be used with conventional electronics and devices designed to receive electrical signals from Hall Effect sensors. By using the commutator and the rotational sensor disclosed here, the rotational position of the armature can be sensed to a finer degree than when conventional sensors are used. For example, when a full ring rotational sensor is used, one sine wave cycle represents one full rotation of the armature. When a commutator, is configured so that at least two segments of the commutator are in electrical communication with at least two segments of the rotational member, one pulse represents approximately 1/2 of a rotation of the armature. In examples where motor 300 is coupled to or drives a lead screw, the number of rotations of the armature can be used to adjust selectively the distance traveled by the lead screw. For example, in examples where one full rotation of the armature (2 pulses) corresponds to 0.1 mm of lead screw travel, the number of pulses can be counted to provide finer adjustment of the lead screw. In this example, after 10 pulses, the lead screw will be displaced about 0.5 mm (10 pulses x 0.05 mm/pulse). Unlike the rotational sensor disclosed here, conventional sensors such as a Hall Effect sensor can only provide a single pulse per revolution of the armature. It will be within the ability of the person of ordinary skill in the art, given the benefit of this disclosure, to select and design other suitable n-segment commutators and n-segment rotational members where n is an integral number from 1 to about 20 more preferably from about 2 to about 12, and most preferably from about 6 to about 10.

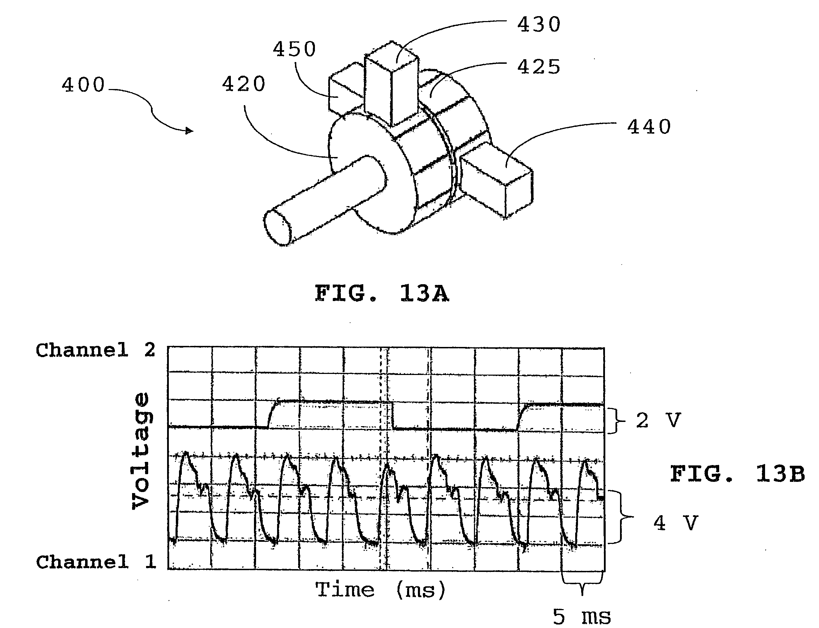

In accordance with another example, an exemplary device 400 comprising a multi-ring commutator 425, a multi-ring rotational member 420 and a rotational sensor 430 is shown in FIG. 13A. In this example, rotational member 420 is split into ten segments where every other segment is connected to an adjacent segment of the commutator, which results in a five-pole rotational member (i.e. only five of the ten segments are configured to carry a signal). Rotational sensor 430 is at a fixed position at a ninety-degree angle to first brush 440 and second brush 450, which are each operative to provide an electrical connection between the armature and a power source (not shown). Typically, as commutator 420 and rotational member 425 rotate, rotational member 420 contacts rotational sensor 430. The first segment of rotational member 420 is in direct contact and electrical communication with the first segment of commutator 425 as is every second segment. As voltage is sensed by the rotational sensor, the sensed voltage indicates the position of the armature in increments of one-fifth of a revolution. In this example, a five-segment commutator is used where each segment of the commutator is in direct contact and in electrical communication with a segment of the rotational member, so five pulses or waves are provided per full rotation of the armature. Referring now to FIG. 13B, with powered applied between brushes 440 and 450 at a voltage level of 12 V DC, as the first segment of the rotational member 420 rotates clockwise away from brush 450 and contacts the rotational sensor 430, a voltage of approximately one-half, or 6 V DC, of that applied between brushes 440 and 450 is sensed (see the first signal pulse in Channel 1 of FIG. 13B). As the commutator and rotational member continue to rotate clockwise away from rotational sensor 430, the second segment of the rotational member 420 contacts rotational sensor 430, and another signal is sensed by the rotational sensor (see the second signal pulse in Channel 1 of FIG. 13B). Each wave of the output signal pulse has a shape similar to the wave shown in FIG. 11C. Optionally, the output signal can be conditioned in a manner similar to the signal conditioning shown in FIG. 12B. Such signal conditioning allows the motor and sensor of the present invention to be used with conventional electronics designed to receive electrical signals from Hall Effect sensors. By using a five-pole commutator and rotational member with the rotational sensor disclosed here, the rotational position of the armature may be sensed to a finer degree than when conventional sensors are used. For example, when a full ring commutator is used, one sine wave (or half sine wave in the case of a split ring commutator) represents one full rotation of the armature. When a five-pole commutator is used, one pulse represents approximately 1/5 of a rotation of the armature. In examples where motor 400 is coupled to or drives a lead screw, the number of rotations of the motor can be used to adjust selectively the distance traveled by the lead screw. For example, in examples where one full rotation of the armature (5 pulses) corresponds to 0.1 mm of lead screw travel, the number of pulses can be counted to provide fine adjustment of the lead screw. In this example, after 10 pulses, the lead screw will be displaced about 0.2 mm (10 pulses x 0.02 mm/pulse). Unlike the rotational sensor disclosed here, conventional sensors such as a Hall Effect sensor can only provide a single pulse per revolution of the armature. It will be within the ability of the person of ordinary skill in the art, given the benefit of this disclosure, to select and design other suitable n-segment commutators and rotational members where n is an integral number from 1 to about 20, more preferably from about 2 to about 12, and most preferably from about 6 to about 10.

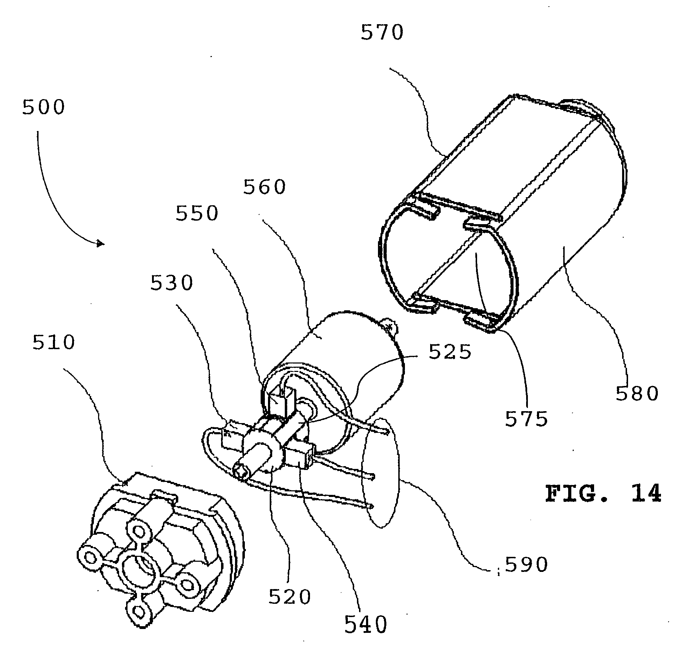

In accordance with certain other examples, an electric motor comprising the rotational sensor disclosed here is shown in FIG. 14. Electric motor 500 includes motor end cap 510, commutator 520, rotational member 525, a first power brush 530 and a second power brush 540, rotational sensor 550, armature and windings 560, a magnetic north pole 570 in motor housing 580 and a magnetic south pole 575 in motor housing 580. The electric motor also includes power and signal wires 590 for inputting of a voltage and/or outputting of a signal sensed by the rotational sensor. The commutator 520 of electric motor 500 may be any suitable commutator that would be selected or designed by the person of ordinary skill in the art given the benefit of this disclosure. Similarly, the rotational member may be a full ring device or may be split into 2 or more segments. In certain examples, the rotational sensor includes a conductive material such as copper, graphite and the like. In other examples, the rotational sensor includes a conductive material and a non-conductive material. It will be recognized by the person of ordinary skill in the art, given the benefit of this disclosure, that numerous other suitable materials can be used in the rotational sensor. In certain examples, the rotational sensor includes substantially the same material as the first and second power brush. The exact size and dimensions of the motor may vary depending on the intended use of the motor. For example, in situations where there is limited space to place the electric motor, the motor typically will be designed to be smaller to fit into the space.

In accordance with certain other examples, an electric motor comprising means, connected to the motor, for sensing one of the speed of a motor shaft and/or a position of the motor armature relative to the motor housing in order to control the rotational movement of the shaft is provided. The means for sensing the speed of the shaft and/or the position of the motor armature may be the rotational sensor or a rotational member in combination with the rotational sensor disclosed here. The means may also be standard Hall Effect sensors, potentiometers, and motor commutator pulse generators, etc. In certain examples, the means include two or more of the sensing means, *e.g.*, the motor includes a rotational member and rotational sensor and a Hall Effect sensor or a potentiometer. Potentiometers attach to a motor and produce an analog voltage that varies as the motor rotates. An A/D converter in the memory seat module can convert the analog signal into a digital signal for further processing. Hall effect sensors are based on electromagnetic principles and are mounted in motors to produce electronic pulses as the motors rotate. These and other suitable sensing means will be selected and recognized by the person of ordinary skill in the art, given the benefit of this disclosure.

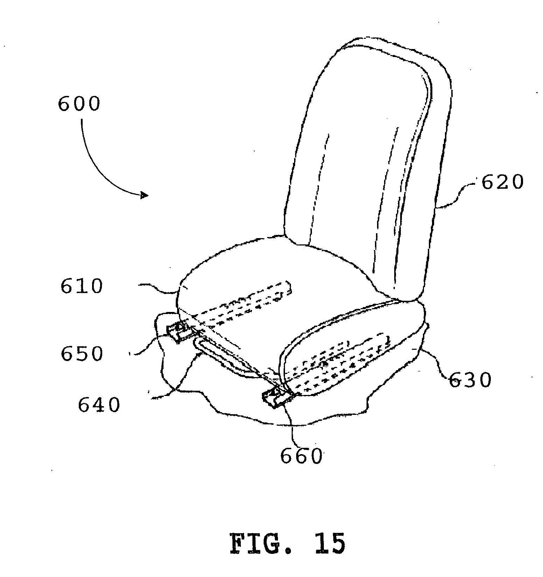

In certain examples, a seat assembly comprises a seat driven by an electric motor including the rotational sensor disclosed here. Referring to FIG. 15, seat assembly 600 comprises seat 610 and seat back 620. The seat assembly typically is mounted to a vehicle floor 630 through first member 650 and second member 660. The seat assembly may comprise a manual adjuster 640 for adjusting the seat position, but preferably, the seat comprises an electric motor that is operative to move the seat relative to the seat base. The electric motor may be any of the electric motors described above and preferably includes a commutator, a rotational member and the rotational sensor as described herein. In certain examples, the electric motor is powered by a DC power supply. In some examples, the seat assembly further includes a memory seat module mounted on one of the seat base or the seat, the memory seat module comprising at least one processor configured to receive the output signal of the rotational sensor. Suitable memory seat modules include but are not limited to those memory seat modules disclosed, for example, in U.S. Patent Nos. 6,590,354 and 5,751,129, the entire disclosures of each of which is hereby incorporated herein by reference for all purposes. The seat may also include a memory unit connected to the at least one processor and configured to store the information, the memory unit further configured to retrieve the information in response to an external signal to return the seat to a second position from a first position. The memory unit typically is, or includes, a memory unit such as RAM, ROM, EPROM, EEPROM and the like. Other suitable memory units will be recognized by the person of ordinary skill in the art given the benefit of this disclosure. The memory unit can be integrated into a larger device, such as a motor controller, or can be located in the motor housing. The memory unit may comprise suitable electromagnetic shielding to prevent the magnetic field from the magnetic poles from interfering with operation of the memory unit. The memory unit may be in communication with a processor, for example, or may be part of a larger electrical device including a processor.

Certain advantages in using the motor with rotational sensor disclosed here in a seat assembly or seat adjuster include the ability to continually control motion of the seat motors to allow for reduction of mechanical stress on the seat mechanisms, changes in seat performance, feel, sound and speed of operation. These and other advantages will be recognized by the person of ordinary skill in the art given the benefit of this disclosure.

In certain examples, a seat assembly also comprises a seat back comprising at least one motor operative to move the seat back. The electric motor may be any of the motors discussed above and preferably includes a commutator, a rotational member and a rotational sensor as disclosed herein. The seat back may also have one or more memory modules, such as those described above, for storing selected positions. In certain examples, a single memory module is used to store selected positions for both the seat and the seat back. It will be within the ability of the person of ordinary skill in the art, given the benefit of this disclosure, to select and design suitable seat assemblies using the motor and rotational sensors disclosed here.

In certain examples, the seat assembly has seat position sensors to provide the seat position information to the memory seat module. The sensors may be located in a sensor assembly attached to portion or portions of the seat and/or seat back. Typically the sensors are placed on or proximate to the motor(s) of the seat assembly. Each sensor is operative to monitor what its corresponding motor has done relative to some reference position. This information can be conveyed from the sensors to a device, *e.g.*, a processor, memory seat module, etc., by electrical wiring. In certain examples, the seat assembly includes a motor comprising the rotational sensor disclosed here and one or more other types of sensors, *e.g.*, potentiometers, Hall effect sensors, and motor commutator pulse generators, etc. These and other suitable sensors will be selected and recognized by the person of ordinary skill in the art, given the benefit of this disclosure.

In certain examples, a memory seat module incorporates motor control relays. Each motor control relay can be associated with a motor of the seat assembly for controlling the associated motor. The seat assembly may further include a motor connector for connecting wires from the motor to a memory seat module and a sensor assembly connector for connecting wires from the rotational sensor to the memory seat module. Suitable motor control relays include those commercially available from Tyco, Omron, Taiko and Greenwich Electronics.

In accordance with other examples, a vehicle power seat adjuster comprising the rotational sensor disclosed here is provided. The vehicle power seat adjuster comprises a first spaced track assembly and a second spaced track assembly, each formed of a first component movable relative to a stationary second component. The power seat adjuster also includes a drive motor having at least one rotatable output shaft. The drive motor may be any of the motors disclosed here or other suitable motors recognized by the person of ordinary skill in the art, given the benefit of this disclosure, and preferably the drive motor includes the rotational sensor disclosed here. In certain examples, the seat adjuster may also include a rotatable lead screw operatively coupled to the first and second components. In certain examples the drive motor is a bi-directional electric motor that rotates a pair of drive shafts extending outward from the motor to a gear assembly or box mounted on each upper track. Typically, each gearbox engages a lead screw extending longitudinally below each upper track. A drive block can be fixedly mounted to each lower track and threadingly receives the lead screw to cause reciprocal, horizontal movement of the upper track and the attached seat support frame upon selective energization of the drive motor. Similar drive mechanisms can be provided for vertical (up and down) adjustment of the seat support frame and, in a seat adjuster having a seat recliner adjustment mechanism, for angularly adjusting the position of the seat back with respect to the seat bottom. The vertical drive mechanism may also include separate front and rear edge drive mechanisms for selectively tilting the front and rear edges of the seat bottom independent of each other as well as simultaneously to raise and lower the entire vehicle seat or, in some applications, only the seat bottom or cushion. Each drive mechanism may also include a drive motor having a rotatable output shaft connected to a gear assembly either directly in the case of the front and rear vertical drive mechanisms or by means of two shafts extending from a single motor to separate gear assemblies mounted on each upper track or on the seat support frame in the case of a seat recliner drive mechanism. The various drive motors, particularly the horizontal drive motor and the seat recliner drive motor, are typically mounted on a motor mounting bracket which extends between and is joined at one or opposite ends to the movable upper track(s) of the track assembly. In certain examples, to span the many possible mounting locations of the horizontal or seat recliner drive motors on the seat adjuster, a flexible drive cable formed of a rotating cable coupled at opposite ends to the drive motor or motor gear box and the lead screw gear box can be used. The rotating cable is typically surrounded by a stationary, flexible outer sheath or cover. A retaining device, such as a mount, fitting or ferrule, may be employed at each end of the flex cable housing cover to secure the cover to the respective gearbox or motor.

In certain examples, the seat assembly and/or the seat adjuster disclosed here may further include one or more gear assemblies, gear boxes, etc. connected to a shaft or member which itself is connected to a motor. Suitable gear assemblies include but are not limited to those disclosed, for example, in U.S. Patent Nos. 6,361,109 and 6,055,877, the entire disclosures of each of which is hereby incorporated herein by reference for all purposes, and those gears, gear assemblies and gear boxes commercially available, for example, from IMS Gear, LM Gear, Micron, etc.

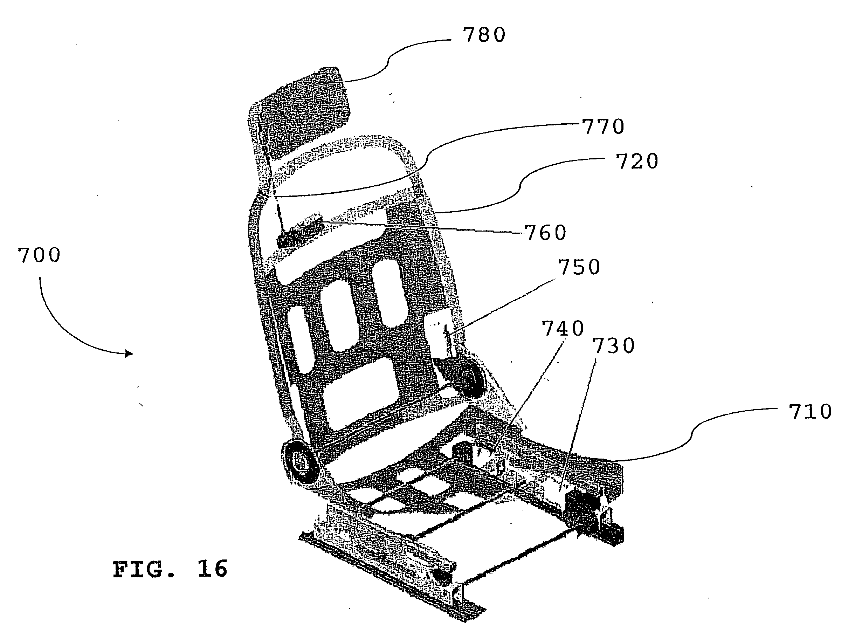

In accordance with other examples, a seat assembly is shown in FIG. 16. Seat assembly 700 typically comprises a seat base 710, a seat back frame 720 and a seat and seat back, which are omitted for clarity. In this example, the seat assembly includes first, second, third and fourth motors 730, 740, 750, 760, respectively. In certain examples, one or more of motors 730, 740, 750, and 760 includes a rotational sensor and/or a rotational member as described herein. Each of the motors typically is attached to an output shaft, such as output shaft 770 attached to electric motor 760. One end of the output shaft 770 is connected to motor 760 and the other end of output shaft 770 is connected to headrest 780 and is operative to move headrest 780 in response to an input signal, such as a signal sent by a controller in electrical communication with the motor. In certain examples, the output shaft is connected to a lead screw that connects to the part of the seat assembly to be moved. In a typical system, when a user activates a control or button, typically attached to a controller and in electrical communication with motor 770, motor 770 is activated and rotates, in either the forward or reverse direction, the output shaft, or the lead screw, which moves the headrest. The other motors 740, 750 and 760 are each operative to move or drive the portion or portions of the seat, through conventional drive systems well known in the art. In certain examples, the motors are activated independently of one another, while in other examples two or more of the motors may be coupled and activated simultaneously in response to a signal from the controller.

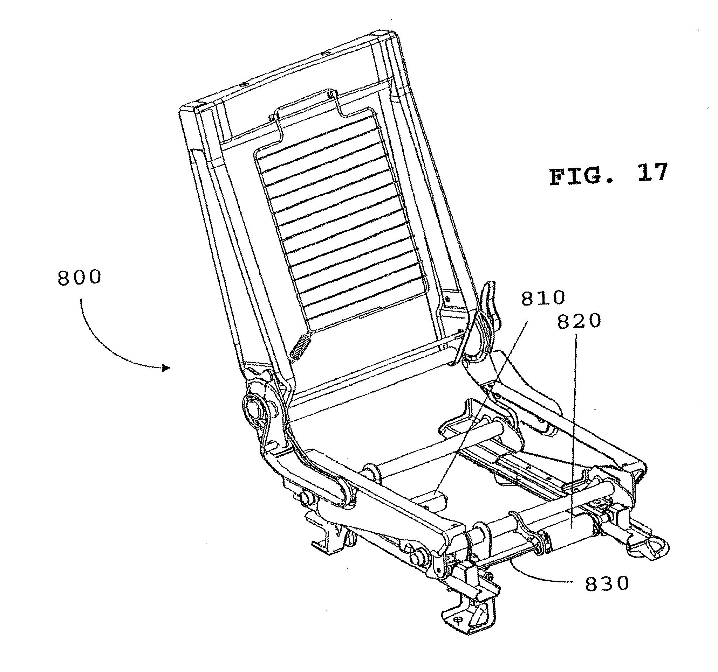

In accordance with certain other examples, another example of a seat assembly is shown in FIG. 17. Seat assembly 800 comprises a first motor 810 and a second motor 820. Each motor has a rotatable lead screw connected to a portion of the seat assembly. Rotatable lead screw 830 of second motor 820 is shown in FIG. 17. Rotatable lead screw is operatively coupled to the seat assembly, *e.g.*, is operatively coupled to a seat track. For example, the seat assembly may include first and second spaced track assemblies, each formed of a first component movable relative to a stationary second component. Motors 810 and 820 may be any of the electric motors disclosed here and preferably at least one of electric motors 810 and 820 comprises a rotational sensor and/or rotational member as described herein. In certain examples, the rotatable lead screw is operatively coupled to the first and second components of the seat track such that the motor can drive the first component of the seat track. In certain examples, the seat assembly further comprises a flexible drive cable coupled between the motor output shaft and the lead screw. It will be recognized by the person of ordinary skill in the art, given the benefit of this disclosure, that the seat assembly shown in FIG. 17 may include additional motors that may or may not include a rotational sensor and/or rotational member as described herein.

While the present invention has been described in terms of certain examples, other examples, and substitutions, alterations and modification of the examples disclosed here, will be recognized by the person of ordinary skill in the art given the benefit of this disclosure. Should the meaning of any of the terms used in the instant specification and claims conflict with the meaning of the terms used in any of the patents incorporated by reference, the meaning of the terms used in the instant specification and claims are intended to be controlling.

## Claims

1. An electric motor comprising:
at least a first magnetic pole and a second magnetic pole;
an armature comprising a commutator rotatable relative to the first and second magnetic poles;
multiple brushes including at least a first brush and a second brush each operative to provide an electrical connection between the armature and a power source; and
a rotational sensor in fixed position relative to the multiple brushes and at least in electrical communication with the commutator, wherein the rotational sensor is operative to output a sinusoidal signal.

2. The electric motor of claim 1 in which the armature further comprises a rotational member in electrical communication with the commutator, wherein the rotational sensor is in at least intermittent contact with the rotational member.

3. The electric motor of claim 1 further comprising an additional rotational sensor in fixed position relative to the multiple brushes and a rotational member in electrical communication with the commutator, wherein each of the rotational sensors is in at least intermittent contact with the rotational member.

4. The electric motor of claim 3 further comprising a circuit in electrical communication with the rotational sensors, the circuit configured to provide a conditioned signal implementing switching hysteresis.

5. The electric motor of claim 1 in which the sinusoidal signal corresponds to a sinusoidal voltage on the commutator.

6. The electric motor of claim 1 in which the rotational sensor generates an output signal in response to the potential at a single point on the commutator.

7. The electric motor of claim 1 in which the rotational sensor generates a portion of a sinusoidal output signal in response to the potential at multiple points on the commutator.

8. The electric motor of claim 1 in which portions of a sinusoidal signal comprises multiple pulses per rotation of the armature.

9. The electric motor of claim 1 further comprising an electrical wire in electrical communication with the rotational sensor.

10. The electric motor of claim 1 wherein the sinusoidal signal represents the rotational position of the armature.

11. The electric motor of claim 1 wherein the rotational sensor is a voltage responsive sensor.

12. The electric motor of claim 1 further comprising an R-C circuit in electrical communication with the rotational sensor and operative to condition the sinusoidal signal.

13. The electric motor of claim 1 further comprising a circuit in electrical communication with the rotational sensor and configured to condition the output signal from the rotational sensor, wherein the conditioned signal is a sine wave.

14. The electric motor of claim 1 further comprising a DC power source in electrical connection with the first brush and the second brush.

15. The electric motor of claim 1 further comprising a processor in electrical communication with the rotational sensor.

16. The electric motor of claim 15 in which the processor is operative to receive the sinusoidal signal to determine one or more armature parameters selected from the group consisting of the rotational position of the armature, the rotational speed of the armature, and the rotational count of the armature.

17. An electric motor comprising:
at least a first magnetic pole and a second magnetic pole;
an armature comprising a commutator and a rotational member, each of the commutator and rotational member being rotatable relative to the first and second magnetic poles;
multiple brushes including at least a first brush and a second brush each operative to provide an electrical connection between the armature and a power source; and
a rotational sensor in fixed position relative to the multiple brushes and at least in intermittent contact with the rotational member, wherein the rotational sensor is operative to output a signal.

18. The electric motor of claim 17 in which the rotational sensor is in continuous contact with the rotational member.

19. The electric motor of claim 17 in which the signal outputted by the rotational sensor corresponds to a voltage on the commutator.

20. The electric motor of claim 17 in which the rotational sensor generates an output signal in response to the potential at a single point on the commutator.

21. The electric motor of claim 17 in which the rotational sensor generates a sinusoidal output signal in response to the potential at multiple points on the commutator.

22. A power seat assembly comprising:
a seat base;
a seat moveably mounted on the seat base;
at least one motor operative to move the seat relative to the seat base,
wherein the at least one motor comprises
at least a first magnetic pole and a second magnetic pole,
an armature comprising a commutator rotatable relative to the first and second magnetic poles,
multiple brushes including at least a first brush and a second brush each operative to provide an electrical connection between the armature and a power source; and
a rotational sensor in fixed position relative to the multiple brushes and at least in electrical communication with the commutator, wherein the rotational sensor is operative to output a sinusoidal signal.

23. The power seat of claim 22 in which the armature further comprises a rotational member in electrical communication with the commutator, wherein the rotational sensor is in at least intermittent contact with the rotational member.

24. The power seat of claim 22 further comprising a DC power supply in electrical communication with the first brush and the second brush.

25. The power seat of claim 22 further comprising a memory seat module mounted on one of the seat base or the seat, the memory seat module comprising at least one processor configured to receive the sinusoidal signal.

26. The power seat of claim 22 in which the sinusoidal signal comprises multiple pulses per rotation of the armature.

27. The power seat of claim 22 further comprising a memory unit in electrical communication with at least one processor and configured to store the sinusoidal signal as stored information.

28. The power seat of claim 27 in which the memory unit is further configured to retrieve stored information in response to an external signal to return the seat to a second position from a first position.

29. The power seat of claim 22 further comprising a seat back.

30. The power seat of claim 29 further comprising at least a second motor operative to move the seat back, wherein the second motor comprises at least a first and second magnetic pole, an armature comprising a commutator rotatable relative to the first and second magnetic pole, multiple brushes including at least a first brush and a second brush each operative to provide an electrical connection between the armature and a power source, and a rotational sensor in fixed position relative to the multiple brushes and at least in electrical communication with the commutator, wherein the rotational sensor of the second motor is operative to output a sinusoidal signal.

31. The power seat of claim 30 further comprising at least one memory module comprising at least one processor configured to receive the sinusoidal signal of the rotational sensor of the second motor.

32. The power seat of claim 31 further comprising a memory unit in electrical communication with the at least one processor and configured to store the second output signal.

33. A vehicle power seat adjuster comprising:
first and second spaced track assemblies, each formed of a first component movable relative to a stationary second component;
a drive motor having at least one rotatable output shaft, the drive motor comprising:
at least first and second magnetic poles,
an armature comprising a commutator rotatable relative to the first and second magnetic poles,
multiple brushes including at least a first brush and a second brush each operative to provide an electrical connection between the armature and a power source, and
a rotational sensor in fixed position relative to the multiple brushes and at least in electrical communication with the commutator, wherein the rotational sensor is operative to output a sinusoidal signal; and
a rotatable lead screw operatively coupled to the first and second components.

34. The vehicle power seat adjuster of claim 33 further comprising a flexible drive cable coupled between the rotatable output shaft of the motor and the lead screw.

35. The vehicle power seat adjuster of claim 33 in which the armature further comprises a rotational member in electrical communication with the commutator, wherein the rotational sensor is in at least intermittent contact with the rotational member.

36. The vehicle power seat adjuster of claim 33 further comprising a DC power supply in electrical communication with the first brush and the second brush.

37. The vehicle power seat adjuster of claim 33 further comprising a memory seat module mounted on one of the seat base or the seat, the memory seat module comprising at least one processor configured to receive the sinusoidal signal from the rotational sensor.

38. The vehicle power seat adjuster of claim 33 further comprising a memory unit in electrical communication with processor and configured to store the sinusoidal signal from the rotational sensor.

39. The vehicle power seat adjuster of claim 33 in which the sinusoidal signal comprises multiple pulses per rotation of the armature

40. The vehicle power seat adjuster of claim 33 further comprising an electrical wire in electrical communication with the rotational sensor.

41. An electric motor comprising:
at least a first magnetic pole and a second magnetic pole in a motor housing;
an armature comprising a commutator rotatable relative to the first and second magnetic poles;
multiple brushes including at least a first brush and a second brush each operative to provide an electrical connection between the armature and a power source; and
sensing means for sensing one of motor shaft speed or a position of the motor armature to control rotational movement of a motor output shaft, wherein the sensing means is operative to output a sinusoidal signal.

42. The electric motor of claim 41 in which the sensing means comprises a rotational member in electrical communication with the commutator and a rotational sensor in intermittent electrical communication with the rotational member.

43. The electric motor of claim 42 in which the sensing means further comprises an additional device selected from the group consisting of a second rotational sensor, a Hall Effect sensor, and a potentiometer.
